# EUROPÄISCHE PATENTSCHRIFT

(11) **EP 1 579 592 B1**
(45) Veröffentlichungstag und Bekanntmachung des Hinweises auf die Patenterteilung: **15.07.2015**
(21) Anmeldenummer: 03788807.0
(22) Anmeldetag: 21.11.2003
(51) Int. Cl.: H04B 3/56

(54) **ELEKTRONISCHES ÜBERTRAGUNGSSYSTEM UND VERFAHREN ZUM ÜBERTRAGEN VON DATENSIGNALEN**
ELECTRONIC TRANSMISSION SYSTEM AND METHOD FOR TRANSMITTING DATA SIGNALS
SYSTEME DE TRANSMISSION ELECTRONIQUE ET PROCEDE DE TRANSMISSION DE SIGNAUX DE DONNEES

(30) Priorität: 24.12.2002 DE 10261002; 15.01.2003 DE 10301317
(43) Veröffentlichungstag der Anmeldung: 28.09.2005
(73) Patentinhaber: ROBERT BOSCH GMBH, 70442 Stuttgart (DE)
(72) Erfinder: WIZEMANN, Thomas, 71642 Ludwigsburg (DE)
(86) Internationale Anmeldenummer: PCT/DE2003/003869
(87) Internationale Veröffentlichungsnummer: WO 2004/062130

(56) Entgegenhaltungen:
- DE-A- 3 634 142
- FR-A- 2 682 837
- US-A- 4 383 243

## Beschreibung

Die Erfindung betrifft ein elektronisches Übertragungssystem zum Übertragen von Datensignalen über eine Stromversorgungsleitung. Weiterhin betrifft die Erfindung ein entsprechendes Verfahren.

### Stand der Technik

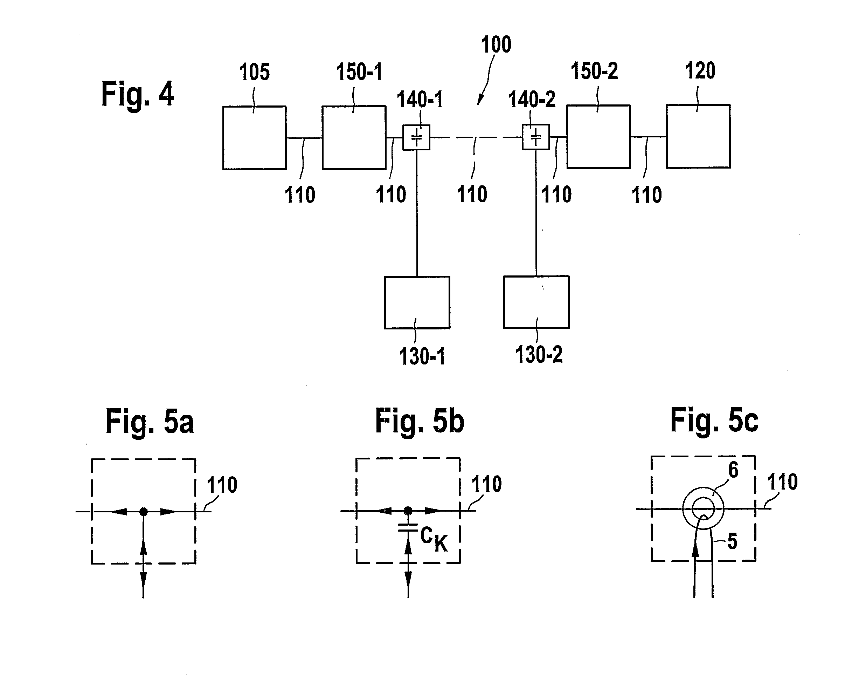

Derartige Systeme und Verfahren sind im Stand der Technik grundsätzlich, zum Beispiel als sogenannte Power-Line-Communication PLC-Systeme bekannt. Ein derartiges System ist in Figur 4 dargestellt und wird nachfolgend näher erläutert. Es umfasst eine Stromversorgungsleitung 110 zum Übertragen von elektrischer Leistung von einer Leistungsquelle 105, die in der Regel einen Transformator aufweist, an einen Endverbraucher 120. Neben der Übertragung von elektrischer Leistung dient die Stromversorgungsleitung 110 auch zur Übertragung von Datensignalen zwischen einem ersten Datengerät 130-1 und einem zweiten Datengerät 130-2. Die beiden Datengeräte werden nicht notwendigerweise über die Stromversorgungsleitung 110 mit elektrischer Leistung elektrischer Leistung, in der Regel nicht aber mit Datensignalen versorgt. Die beiden Datengeräte 130-1 und 130-2 sind jeweils über ihnen individuell zugeordnete Kopplungseinrichtung 140-1 und 140-1 und 140-2 an die Stromversorgungsleitung 110 angeschlossen.

Figur 5 zeigt verschiedene im Stand der Technik bekannte Ausführungsbeispiele für geeignete Kopplungseinrichtungen 140-1 und 140-2. Figur 5a zeigt ein erstes bekanntes Ausführungsbeispiel für eine derartige Kopplungseinrichtung. Sie zeigt eine galvanische Kopplung, wobei die Kopplungseinrichtung lediglich in einer elektronischen Leitung besteht, die an die Stromversorgungsleitung 110 angeschlossen ist. Figur 5b zeigt ein zweites Ausführungsbeispiel für eine bekannte Kopplungseinrichtung. Bei dieser sogenannten kapazitiven Kopplung wird ein Datensignal über einen Kopplungskondensator Cₖ auf die Stromversorgungsleitung 110 eingekoppelt. Wichtig ist, dass bei dieser kapazitiven Kopplung - genauso wie bei der galvanischen Kopplung - ein auf die Stromversorgungsleitung 110 eingekoppeltes Datensignal sich in beide Richtungen, das heißt nach rechts und nach links in Figur 5b auf der Stromversorgungsleitung 110 ausbreitet. Umgekehrt sind die galvanische und die kapazitive Ankopplung auch geeignet, sowohl Signale, die von rechts, wie auch Signale, die von links über die Stromversorgungsleitung 110 transportiert werden, uber den Kopplungskondensator Cₖ in das zugehörige Datengerät 130 einzukoppeln.

Figur 5c zeigt schließlich ein bekanntes Ausführungsbeispiel für eine induktive Kopplung. Das Datensignal wird in die in Figur 5c als vertikale Schleife dargestellte elektronische Leitung 5 eingekoppelt und dann aufgrund einer magnetischen Kopplung zwischen dieser Leitung 5 und der Stromversorgungsleitung 110 auf diese eingekoppelt. Diese induktive Kopplung wird durch einen magnetischen Ringkern 6 wesentlich verbessert. Im Unterschied zu der galvanischen oder der kapazitiven Kopplung ist die induktive Kopplung richtungsabhängig. Das heißt, je nach Richtung des Stromes durch die elektrische Leitung 5 und damit je nach Einkoppelrichtung des Datensignals breitet sich dieses entweder nur nach links oder nach rechts, ausgehend von dem Einkoppelpunkt auf der Stromversorgungsleitung 110 aus.

Wie in Figur 4 angedeutet erfolgt die Ankopplung der Datengeräte vorzugsweise kapazitiv. Dies hat bei der in Figur 4 gezeigten Anordnung zur Folge, dass sich Datensignale, die von dem Datengerät 130-1 ausgesendet werden, über die kapazitive Kopplungseinrichtung 140-1 von dort aus sowohl nach rechts wie auch nach links über die Stromversorgungsleitung 110 ausbreiten. Eine ungehinderte Ausbreitung der Datensignale nach links in Figur 4 in die Leistungsquelle 105 hätte, insbesondere wenn diese Leistungsquelle einen Transformator umfasst, den Nachteil, dass die Datensignale dadurch stark belastet würden; es käme zu einem Kurzschluss der Datensignale in der Sekundärwicklung des Trafos, was einen erheblichen Leistungsverlust für das Datensignal bedeuten würde. Um einen solchen Leistungsverlust, aber auch die Ausbreitung von in der Leistungsquelle 105 generierten Störungen über die Stromversorgungsleitung 110 und damit auf die Datensignale zu verhindern, ist zwischen der Leistungsquelle 105 und der Kopplungseinrichtung 140-1 eine Drossel 150-1 vorgesehen. Eine entsprechende Funktion hat auch die an dem endverbraucherseiten Ende der Stromversorgungsleitung 110 vorgesehene Drossel 150-2. Auch sie verhindert einerseits, dass Datensignale in den Endverbraucher 120 gelangen und andererseits, dass von dem

Endverbraucher 120 ausgehende Störungen sich auf der Versorgungsleitung 110 in Richtung auf die Leistungsquelle 105 hin ausdehnen und eine eventuelle Übertragung von Datensignalen stören.

Diese übliche Verwendung der Drosseln 150-1, 150-2 hat neben den aufgezeigten Vorteilen jedoch den Nachteil, dass sie insbesondere bei Stromversorgungsleitungen 110 für hohe Leistungen sehr groß und teuer ist.

Die französische Patentanmeldung FR 2 682 837 A offenbart eine Richtkoppler-Schaltung zum Übertragen von Datensignalen über eine Stromversorgungsleitung.

Die deutsche Patentanmeldung DE 36 34142 A1 offenbart eine Schaltungsanordnung zur Übertragung von Informationen in einander entgegengesetzte Richtungen über einen Trenntransformator.

Ausgehend von diesem Stand der Technik ist es die Aufgabe der Erfindung, ein bekanntes elektrisches Übertragungssystem und Verfahren zum Übertragen von Datensignalen über eine Stromversorgungsleitung, wobei Drosseln zum Freihalten der Datensignale von Belastungen und Störungen verwendet werden, derart weiterzubilden, dass die Drosseln entbehrlich sind, ohne dass die Datensignale während ihrer Übertragung belastet oder gestört werden. Diese Aufgabe wird durch den Gegenstand des Patentanspruchs 1 gelöst. Genauer gesagt erfolgt die Lösung insbesondere dadurch, dass mindestens eine der Kopplungseinrichtungen als Richtkoppler ausgebildet ist.

### Vorteile der Erfindung

Diese erfindungsgemäße Ausbildung der Kopplungseinrichtung hat den Vorteil, dass die aus dem Stand der Technik bekannten Drosseln entbehrlich sind und damit Koscen und Bauvolumen bei dem erfindungsgemäßen elektronischen Übertragungssystem eingespart werden können. Gemäß einer ersten vorteilhaften Ausgestaltung des beanspruchten Übertragers ist ein erster Richtkoppler an dem leistungsquellenseitigen Ende der S.tromversorgungsleitung vorgesehen. Dieser ist vorzugsweise so ausgebildet, dass er von dem ihm zugeordneten ersten Datengerät ausgesendete Datensignale nur in Richtung auf das endverbraucherseitige Ende der Stromversorgungsleitung hin auf diese einkoppelt und Datensignale, die er aus dieser Richtung kommend empfängt, auch nur an das ihm zugeordnete erste Datengerät weiterleitet. Eine derartige Ausbildung des Richtkopplers hinsichtlich seiner Richtungswirkung bietet den Vorteil, dass keine Datensignale in die Leistungsquelle eingekoppelt und dadurch belastet werden. Außerdem können eventuelle von der Leistungsquelle ausgehende Störungen nicht in das erste Datengerät eingekoppelt werden.

Gemäß einem zweiten Ausführungsbeispiel der Erfindung ist an dem verbraucherseitigen Ende der Stromversorgungsleitung ein Richtkoppler vorgesehen. Erfindungsgemäß ist dieser Richtkoppler so ausgebildet, dass er von dem ihm zugeordneten zweiten Datengerät ausgesendete Datensignale nur in Richtung auf das leistungsquellenseitige Ende der Stromversorgungsleitung hin auf diese einkoppelt und Datensignale, die er aus dieser Richtung kommend empfängt, auch nur an das ihm zugeordnete zweite Datengerät weiterleitet. Aufgrund einer derartig eingestellten Richtwirkung des Richtkopplers an dem verbraucherseitigen Ende der Stromversorgungsleitung können Störungen von dem Endgerät nicht in das zweite Datengerät eingekoppelt werden. Außerdem können eventuelle von dem Endverbraucher ausgehende Störungen nicht in das zweite Datengerät eingekoppelt werden. Von der Leistungsquelle ausgehende Störungen können zwar grundsätzlich aufgrund der Richtungswirkung dieses Richtkopplers in das zweite Datengerät eingekoppelt werden; sie sind aber aufgrund der in der Regel sehr großen Länge der Stromversorgungsleitung stark gedämpft.

Für Modulationsfrequenzen unterhalb einer ersten vorgebbaren Schwellenfrequenz, mit denen die Datensignale auf eine Trägerfrequenz aufmoduliert werden, ist es vorteilhaft, wenn der Richtkoppler als eine schaltungstechnische Kombination einer induktiven und einer kapazitiven Anbindung ausgebildet ist.

Für Modulationsfrequenzen oberhalb einer zweiten vorgebbaren Schwellenfrequenz bietet es sich an, den Richtkoppler im Wesentlichen in Form einer Koppelleitung auszubilden, die zumindest ein stückweit parallel zu der Versorgungsleitung geführt ist und mit dieser in elektromagnetischer Wechselwirkung steht.

Weitere vorteilhafte Ausgestaltungen des beanspruchten Übertragungssystems sind Gegenstand der Unteransprüche.

Die oben genannte Aufgabe der Erfindung wird weiterhin durch ein Verfahren zum Übertragen von Datensignalen über eine Stromversorgungsleitung gelöst. Die Vorteile dieses Verfahrens entsprechen den oben im Hinblick auf das beanspruchte elektronische Übertragungssystem genannten Vorteilen.

### Zeichnungen

Der Beschreibung sind insgesamt fünf Figuren beigefügt, wobei
- Figur 1: ein erfindungsgemäßes Übertragungssystem;
- Figur 2: ein erstes Ausführungsbeispiel für einen erfindungsgemäßen Richtkoppler;
- Figur 3: ein zweites Ausführungsbeispiel für einen erfindungsgemäßen Richtkoppler;
- Figur 4: ein elektronisches Übertragungssystem gemäß dem Stand der Technik; und
- Figur 5: verschiedene Kopplungseinrichtungen aus dem Stand der Technik mit
- Figur 5a: einer bekannten galvanischen Kopplung;
- Figur 5b: einer bekannten kapazitiven Kopplung; und
- Figur 5c: einer bekannten induktiven Kopplung
zeigt.

### Beschreibung der Ausführungsbeispiele

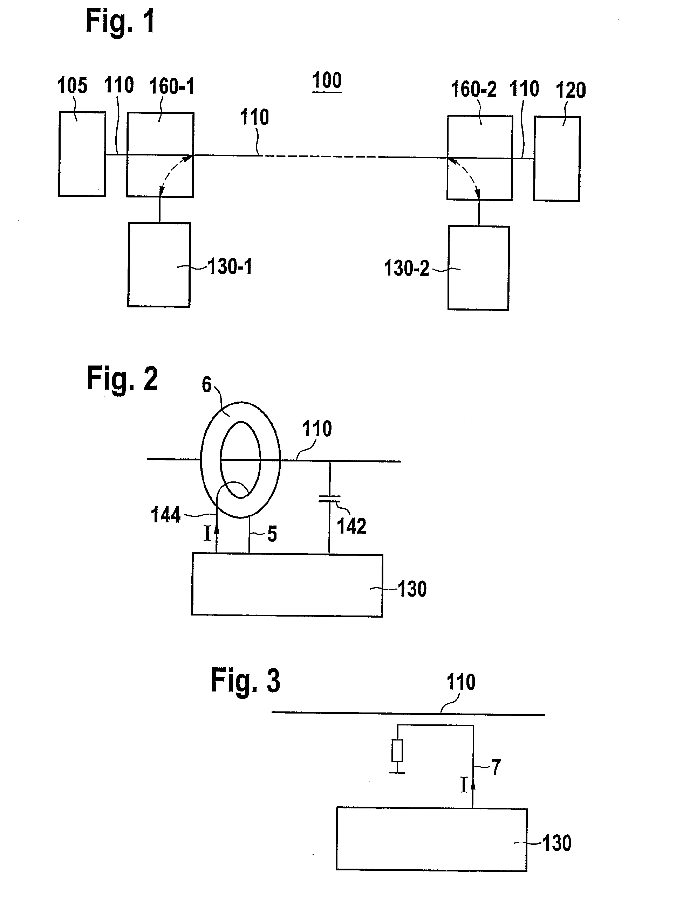

Figur 1 zeigt ein erfindungsgemäßes elektronisches Übertragungssystem 100 zum Übertragen von elektrischer Leistung und von Datensignalen über eine Stromversorgungsleitung 110. Die elektrische Leistung wird von einer Leistungsquelle 105 über die Stromversorgungsleitung 110 an einen Endverbraucher 120 übertragen. An den Endverbraucher werden keine Datensignale übertragen. Ein Austausch von Datensignalen findet lediglich zwischen einem ersten Datengerät 130-1 und einem zweiten Datengerät 130-2 statt. Die Übertragung der Datensignale zwischen diesen Datengeräten 130 erfolgt über die Stromversorgungsleitung 110. Zu diesem Zweck werden die Datensignale mit Hilfe von als Richtkoppler ausgebildeten Kopplungseinrichtungen 160-1 und 160-2 auf die Stromversorgungsleitung 110 ein- bzw. ausgekoppelt. Jedem Datengerät 130-1, 130-2 ist ein eigener Richtkoppler 160-1, 160-2 zugeordnet.

Die Stromversorgungsleitung 110 verläuft durch beide Richtkoppler 160-1 und 160-2 hindurch, so dass die Leistungsübertragung von der Leistungsquelle 105 an den Endverbraucher 120 durch die Richtkoppler 160 nicht beeinflusst wird. Bezogen auf die Ausbreitungsrichtung der Datensignale üben die Richtkoppler 160-1 und 160-2 dagegen sehr wohl eine gewünschte vordefinierte Richtungswirkung aus. So ist der erste Richtkoppler 160-1, der dem ersten Datengerät 130-1 zugeordnet ist, so ausgebildet, dass er von dem ersten Datengerät 130-1 ausgesendete Datensignale lediglich in der Weise auf die Stromversorgungsleitung 110 einkoppelt, dass sie sich auf dieser in der gewünschten Richtung auf das zweite Datengerät 130-2 hin ausbreiten beziehungsweise fortbewegen können. Der erste Richtkoppler 160-1 ist vorzugsweise bidirektional ausgebildet. Datensignale, die sich auf der Stromversorgungsleitung 110 in Richtung auf die Leistungsquelle 105 beziehungsweise auf das erste Datengerät 130-1 hin zu bewegen, werden von ihm automatisch abgefangen und dem ersten Datengerät zuführt. Anders ausgedrückt, Datensignale, die sich auf der Stromversorgungsleitung 110 in Richtung auf die Leistungsquelle hin bewegen, haben keine Chance, die Leistungsquelle 105 zu erreichen, weil sie vorher von dem ersten Richtkoppler 160-1 auf das erste Datengerät hin umgeleitet werden.

Ganz ähnlich arbeitet der zweite Richtkoppler 160-2. Er ist so ausgebildet, dass insbesondere von dem ersten Datengerät 130-1 ausgesendete Datensignale, die sich über die Stromversorgungsleitung 110 in Richtung auf den Endverbraucher hin zu bewegen, von dem zweiten Richtkoppler 160-2 auf das zweite Datengerät 130-2 hin umgeleitet werden, und auf diese Weise von dem Endverbraucher 120 ferngehalten werden. Aufgrund dieser Richtungswirkung können weiterhin von dem zweiten Datengerät 130-2 ausgesendete Datensignale lediglich in Richtung auf das erste Datengerät 130-1 auf die Stromversorgungsleitung 110 eingekoppelt werden; eine Einkopplung in Richtung auf den Endverbraucher 120 hin wird von dem zweiten Richtkoppler 160-2 nicht zugelassen.

Hinsichtlich der negativen Beeinflussung der Datensignale auf der Stromversorgungsleitung 110 durch Belastungen oder Störungen bieten die beschriebenen Ausgestaltungen der Richtkoppler die folgenden Vorteile.

Aufgrund der beschriebenen Ausgestaltung des ersten Richtkopplers 160-1 können Datensignale, sei es dass sie von dem ersten oder von dem zweiten Datengerät ausgesendet worden sind, nicht in die Leistungsquelle 105 und insbesondere nicht an einen darin eventuell vorhandenen Transformator gelangen. Damit ist auch ein Kurzschluss dieser Datensignale zum Beispiel in der Sekundärwicklung eines solchen Transformators und ein damit einhergehender Leistungsverlust, das heißt eine damit einhergehende Belastung des Datensignals nicht möglich. Aufgrund der beschriebenen Ausbildung des zweiten Richtkopplers 140-2 ist eine entsprechende Belastung des Datensignals durch den Endverbraucher 120 ebenfalls ausgeschlossen.

Aufgrund der jeweiligen Richtungswirkungen der beiden Richtkoppler besteht jedoch grundsätzlich noch die Möglichkeit, dass von der Leistungsquelle 105 und/oder dem Endverbraucher 120 ausgehende Störungen sich durch die jeweils nächstgelegenen Richtkoppler hindurch auf der Stromversorgungsleitung 110 ausbreiten. Derartige Störungen sind jedoch aufgrund der in der Regel sehr langen Stromversorgungsleitung 110 sehr stark gedämpft, bevor sie ein Datengerät erreichen würden, und deshalb in der Praxis vernachlässigbar.

Außerdem laufen bei einer Übertragung von Datensignalen von dem zweiten Datengerät 130-2 auf das erste Datengerät 130-1 hin eventuelle von der Leistungsquelle 5 generierte Störsignale in entgegengesetzte Richtung zu den Datensignalen und werden deshalb unterdrückt. Gleiches gilt bei der Übertragung von Datensignalen von dem ersten Datengerät 130-1 in Richtung auf das zweite Datengerät 130-2; eventuelle von dem Endverbraucher 120 ausgehende Störsignale werden zwar von dem zweiten Richtkoppler 160-2 durchgelassen, breiten sich aber auf der Versorgungsleitung 110 im Vergleich zu den Datensignalen in entgegengesetzter Richtung aus und werden deshalb unterdrückt.

Aufgrund der erfindungsgemäßen Ausgestaltung der Kopplungselemente 160-1 und 160-2 als Richtkoppler ist es deshalb möglich, eine nahezu störungsfreie Übertragung von Datensignalen über die Stromversorgungsleitung 110 mit wesentlich preisgünstigeren und platzsparenderen Mitteln zu realisieren.

Figur 2 zeigt ein erstes Ausführungsbeispiel für einen Richtkoppler. Dieser besteht aus einer Kombination einer kapazitiven Ankoppelschaltung 142 und einer induktiven Ankoppelschaltung 144. Wie bereits einleitend unter Bezugnahme auf Figur 5 erwähnt wurde, breiten sich bei Verwendung einer kapazitiven Ankoppelschaltung die von dem Datengerät 130 ausgesendeten Datensignale in beiden Richtungen auf der Versorgungsleitung 110 aus. Im Unterschied dazu hängt bei Verwendung der induktiven Ankoppelschaltung 144 die Ausbreitungsrichtung der von dem Datengerät 130 ausgesendeten Datensignale auf der Stromversorgungsleitung 110 von der Richtung des Einkoppelstromes I ab. Bei dem ersten Ausführungsbeispiel des Richtkopplers ist vorgesehen, dass ein zu übertragendes Datensignal gleichzeitig sowohl in die induktive wie auch in die kapazitive Ankoppelschaltung eingespeist wird. Nach der Einkopplung des Datensignals auf die Stromversorgungsleitung 110 kommt es dort zu einer Überlagerung der von den beiden Ankoppelschaltungen 144 und 142 eingekoppelten Strömen. Genauer gesagt kommt es je nach Richtung des Stromes I in einer Richtung zu einer Überlagerung der Datensignalströme, während es in der anderen Ausbreitungsrichtung zu einer Auslöschung dieser Ströme aufgrund des Superpositionsprinzips kommt. Je nach Polarität beziehungsweise Richtung, mit welcher das Datensignal in die elektrische Leitung 5 der induktiven Ankoppelschaltung 144 eingespeist wird, lässt sich damit eine Richtungswirkung des Richtkopplers gemäß dem ersten Ausführungsbeispiel nach rechts oder links erreichen.

Figur 3 zeigt ein zweites Ausführungsbeispiel für einen erfindungsgemäßen Richtkoppler. Es sieht vor, das zu übertragende elektronische Datensignal mit Hilfe einer Koppelleitung 7, die zumindest stückweise parallel zu der Stromversorgungsleitung 110 geführt ist, auf diese ein- bzw. von dieser auszukoppeln. Die Ein- bzw. Auskopplung erfolgt hier aufgrund einer elektromagnetischen Wechselwirkung zwischen den Leitungen 7 und 110. Je nach Richtung, mit welcher ein Datensignalstrom I durch die Koppelleitung 7 parallel zu der Stromversorgungsleitung 110 fließt, kann bei dem zweiten Ausführungsbeispiel eine Einkopplung von Datensignalen nach rechts oder nach links auf der Stromversorgungsleitung 110 erreicht werden.

Die beiden aufgezeigten Ausführungsbeispiele für die Ausbildung der Richtkoppler sind insgesamt wesentlich weniger aufwendig als eine Entstörung mit Hilfe der aus dem Stand der Technik bekannten Drosseln, auch wenn sie eine Kombination von kapazitiven und induktiven Ankoppelschaltungen aufweisen.

Mögliche Anwendungsfälle für das beanspruchte elektronische Übertragungssystem beziehungsweise Verfahren sind zum Beispiel Antiblockiersysteme bei LKWs oder aber die Energie und Datenversorgung von Haushalten durch Energieversorgungsunternehmen.

## Patentansprüche

1. Elektronisches Übertragungssystem (100) zum Übertragen von Datensignalen über eine Stromversorgungsleitung (110), umfassend
a) die Stromversorgungsleitung (110) zum Übertragen von elektrischer Leistung von einer Leistungsquelle (105) an einen Endverbraucher (120); und
b) mindestens zwei Kopplungseinrichtungen (160-1, 160-2) zum Ein-und/oder Auskoppeln der Datensignale, die zwischen mindestens zwei, den Kopplungseinrichtungen jeweils zugeordneten Datengeräten (130-1, 130-2) übertragen werden, auf die Stromversorgungsleitung (110);
wobei mindestens eine der Kopplungseinrichtungen (160-1, 160-2) als Richtkoppler ausgebildet ist,
**dadurch gekennzeichnet, dass** der Richtkoppler eine Kombination einer induktiven (144) und einer kapazitiven (142) Kopplungseinrichtung aufweist,
wobei zur Kopplung des zugeordneten Datengerätes (130-1, 130-2) mit der Stromversorgungsleitung die induktive Kopplungseinrichtung (144) und die kapazitive Kopplungseinrichtung (142) als Parallelschaltung zwischen dem zugeordneten Datengerät (130-1,130-2) und der Stromversorgungsleitung (110) angeordnet sind.

2. Übertragungssystem nach Anspruch 1,
**dadurch gekennzeichnet, dass** ein an dem leistungsquellenseitigen Ende der Stromversorgungsleitung (110) vorgesehener erster Richtkoppler (160-1) ausgebildet ist, von dem ihm zugeordneten ersten Datengerät (130-1) ausgesendete Datensignale nur in Richtung auf das endverbraucherseitige Ende der Stromversorgungsleitung hin auf diese einzukoppeln und Datensignale, die er aus dieser Richtung kommend empfängt, auch nur an das ihm zugeordnete erste Datengerät (130-1) weiterzuleiten.

3. Übertragungssystem nach einem der vorangegangenen Ansprüche,
**dadurch gekennzeichnet, dass** ein an dem verbraucherseitigen Ende der Stromversorgungsleitung (110) vorgesehener zweiter Richtkoppler (160-2) ausgebildet ist, von dem ihm zugeordneten zweiten Datengerät (130-2) ausgesendete Datensignale nur in Richtung auf das leistungsquellenseitige Ende der Stromversorgungsleitung (110) hin auf diese einzukoppeln und Datensignale, die er aus dieser Richtung kommend empfängt, auch nur an das ihm zugeordnete zweite Datengerät (130-2) weiterzuleiten.

4. Übertragungssystem nach einem der vorangegangenen Ansprüche,
**dadurch gekennzeichnet, dass** der Richtkoppler (160-1, 160-2) für eine bidirektionale Übertragung der Datensignale ausgebildet ist.

5. Übertragungssystem nach einem der vorangegangenen Ansprüche,
**dadurch gekennzeichnet, dass** die Leistungsquelle (105) einen Transformator umfasst.

6. Verfahren zum Übertragen von Datensignalen über eine Stromversorgungsleitung (110), wobei mindestens zwei Kopplungseinrichtungen (160-1, 160-2) zum Ein- und/oder Auskoppeln der Datensignale, die zwischen mindestens zwei, den Kopplungseinrichtungen jeweils zugeordneten Datengeräten (130-1,130-2) übertragen werden, auf die Stromversorgungsleitung (110) vorgesehen werden und mindestens eine der Kopplungseinrichtungen (160-1, 60-2) als Richtkoppler ausgebildet wird,
wobei der Richtkoppler eine Kombination einer induktiven (144) und einer kapazitiven (142) Kopplungseinrichtung aufweist,
wobei zur Kopplung des zugeordneten Datengerätes (130-1,130-2) mit der Stromversorgungsleitung die induktive Kopplungseinrichtung (144) und die kapazitive Kopplungseinrichtung (142) als Parallelschaltung zwischen dem zugeordneten Datengerät (130-1,130-2) und der Stromversorgungsleitung (110) angeordnet sind,
wobei ein zu übertragendes Datensignal gleichzeitig sowohl in die induktive wie auch in die kapazitive Ankoppelschaltung eingespeist wird,
wobei es nach der Einkopplung des Datensignals auf die Stromversorgungsleitung zu einer überlagerung der von den beiden Ankoppelschaltungen eingekoppelten Strömen kommt,
so dass es in einer Richtung zu einer Überlagerung der Datensignalströme und in der anderen Ausbreitungsrichtung zu einer Auslöschung dieser Ströme kommt.

## Claims

1. Electronic transmission system (100) for transporting data signals over a power supply line (110), comprising
a) the power supply line (110) for transmitting electric power from a power source (105) to an end user (120); and
b) at least two coupling devices (160-1, 160-2) for coupling in and/or out the data signals that are transmitted between at least two data devices (130-1, 130-2), which are respectively associated with the coupling devices, onto the power supply line (110); wherein at least one of the coupling devices (160-1, 160-2) is in the form of a directional coupler, **characterized in that** the directional coupler has a combination of an inductive (144) and a capacitive (142) coupling device,
wherein for the purpose of coupling the associated data device (130-1, 130-2) to the power supply line the inductive coupling device (144) and the capacitive coupling device (142) are arranged as a parallel circuit between the associated data device (130-1, 130-2) and the power supply line (110).

2. Transmission system according to Claim 1, **characterized in that** a first directional coupler (160-1) provided at the power source end of the power supply line (110) is designed to couple in data signals transmitted by the first data device (130-1) associated with said directional coupler onto the power supply line only in the direction of the end user end thereof and to forward data signals that it receives from this direction also only to the first data device (130-1) associated with said directional coupler.

3. Transmission system according to either of the preceding claims,
**characterized in that** a second directional coupler (160-2) provided at the load end of the power supply line (110) is designed to couple in data signals transmitted by the second data device (130-2) associated with said directional coupler onto the power supply line (110) only in the direction of the power source end thereof and to forward data signals that it receives from this direction also only to the second data device (130-2) associated with said directional coupler.

4. Transmission system according to one of the preceding claims,
**characterized in that** the directional coupler (160-1, 160-2) is designed for bidirectional transmission of the data signals.

5. Transmission system according to one of the preceding claims,
**characterized in that** the power source (105) comprises a transformer.

6. Method for transmitting data signals via a power supply line (110), wherein at least two coupling devices (160-1, 160-2) for coupling in and/or out the data signals that are transmitted between at least two data devices (130-1, 130-2), which are respectively associated with the coupling devices, onto the power supply line (110) are provided and at least one of the coupling devices (160-1, 160-2) is in the form of a directional coupler,
wherein the directional coupler has a combination of an inductive (144) and a capacitive (142) coupling device, wherein for the purpose of coupling the associated data device (130-1, 130-2) to the power supply line the inductive coupling device (144) and the capacitive coupling device (142) are arranged as a parallel circuit between the associated data device (130-1, 130-2) and the power supply line (110),
wherein a data signal to be transmitted is simultaneously fed both to the inductive and to the capacitive coupling circuit,
wherein following coupling in of the data signal onto the power supply line the currents coupled in by the two coupling circuits are superimposed,
so that in one direction the data signal currents are superimposed and in the other propagation direction these currents are cancelled out.

## Revendications

1. Système de transmission électronique (100) pour transmettre des signaux de données sur une ligne d'alimentation électrique (110), comprenant
a) la ligne d'alimentation électrique (110) pour transmettre une puissance électrique d'une source de puissance (105) à un utilisateur final (120) ; et
b) au moins deux dispositifs de couplage (160-1, 160-2) pour coupler en entrée et/ou en sortie des signaux de données qui sont transmis entre au moins deux appareils de données (130-1, 130-2) respectivement associés aux dispositifs de couplage, sur la ligne d'alimentation électrique (110);
dans lequel au moins l'un des dispositifs de couplage (160-1, 160-2) est réalisé sous la forme d'un coupleur directionnel,
**caractérisé en ce que** le coupleur directionnel comporte une combinaison d'un dispositif de couplage à induction (144) et d'un dispositif de couplage capacitif (142), dans lequel le dispositif de couplage à induction (144) et le dispositif de couplage capacitif (142) sont agencés sous la forme d'un circuit parallèle entre l'appareil de données associé (130-1, 130-2) et la ligne d'alimentation électrique (110) pour le couplage de l'appareil de données associé (130-1, 130-2) à la ligne d'alimentation électrique.

2. Système de transmission selon la revendication 1,
**caractérisé en ce qu'**un premier coupleur directionnel (160-1) prévu à l'extrémité de la ligne d'alimentation électrique (110) se trouvant du côté de la source de puissance est conçu pour coupler des signaux de données émis par le premier appareil de données (130-1) qui lui est associé uniquement dans la direction de l'extrémité de la ligne d'alimentation électrique se trouvant du côté de l'utilisateur final, en entrée de celle-ci, et pour réacheminer des signaux de données qu'il reçoit en provenance de cette direction, également uniquement vers le premier appareil de données (130-1) qui lui est associé.

3. Système de transmission selon l'une quelconque des revendications précédentes,
**caractérisé en ce qu'**un second coupleur directionnel (160-2) prévu à l'extrémité de la ligne d'alimentation électrique (110) se trouvant du côté de l'utilisateur de puissance est conçu pour coupler des signaux de données émis par le second appareil de données (130-2) qui lui est associé uniquement dans la direction de l'extrémité de la ligne d'alimentation électrique (110) se trouvant du côté de la source de puissance, en entrée de celle-ci, et pour réacheminer des signaux de données qu'il reçoit en provenance de cette direction, également uniquement vers le second appareil de données (130-2) qui lui est associé.

4. Système de transmission selon l'une quelconque des revendications précédentes, **caractérisé en ce que** le coupleur directionnel (160-1, 160-2) est conçu pour une transmission bidirectionnelle des signaux de données.

5. Système de transmission selon l'une quelconque des revendications précédentes, **caractérisé en ce que** la source de puissance (105) comprend un transformateur.

6. Procédé de transmission de signaux de données par l'intermédiaire d'une ligne d'alimentation électrique (110), dans lequel il est prévu au moins deux dispositifs de couplage (160-1, 160-2) pour coupler en entrée et/ou en sortie les signaux de données qui sont transmis entre au moins deux appareils de données (130-1, 130-2) respectivement associés aux dispositifs de couplage, sur la ligne d'alimentation électrique (110) et au moins l'un des dispositifs de couplage (160-1, 160-2) est réalisé sous la forme d'un coupleur directionnel,
dans lequel le coupleur directionnel comporte une combinaison d'un dispositif de couplage à induction (144) et d'un dispositif de couplage capacitif (142), dans lequel le dispositif de couplage à induction (144) et le dispositif de couplage capacitif (142) sont agencés sous la forme d'un circuit parallèle entre l'appareil de données associé (130-1, 130-2) et la ligne d'alimentation électrique (110) pour le couplage de l'appareil de données associé (130-1, 130-2) à la ligne d'alimentation électrique,
dans lequel un signal de données à transmettre est simultanément délivré au dispositif de couplage à induction et au dispositif de couplage capacitif,
dans lequel il se produit après le couplage en entré du signal de données à la ligne d'alimentation électrique une superposition des courants couplés en entrée par les deux circuits de couplage,
de manière à ce qu'il se produise dans une direction une superposition des courants de signaux de données et dans l'autre direction de propagation une suppression de ces courants.
